(19) Europäisches Patentamt

European Patent Office

Office européen des brevets

(11) **EP 4 485 420 A1**

(12) **EUROPÄISCHE PATENTANMELDUNG**

(43) Veröffentlichungstag:
**01.01.2025 Patentblatt 2025/01**

(21) Anmeldenummer: **24181626.3**

(22) Anmeldetag: **12.06.2024**

(51) Internationale Patentklassifikation (IPC):
**G08G 1/04** *(2006.01)* **G08G 1/052** *(2006.01)*
**G08G 1/01** *(2006.01)* **G01S 17/88** *(2006.01)*

(52) Gemeinsame Patentklassifikation (CPC):
**G01S 17/88; G08G 1/0112; G08G 1/04;**
**G08G 1/052**

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **20.06.2023 DE 102023116066**

(71) Anmelder: **IGI Ingenieurgesellschaft für Interfaces mbH**
**57223 Kreuztal (DE)**

(72) Erfinder: **Grimm, Prof. Albrecht**
**57271 Hilchenbach (DE)**

(74) Vertreter: **advotec.**
**Patent- und Rechtsanwaltspartnerschaft**
**Tappe mbB**
**Bahnhofstrasse 4**
**57072 Siegen (DE)**

(54) **SYSTEM UND VERFAHREN ZUR GESCHWINDIGKEITSÜBERWACHUNG VON FAHRZEUGEN**

(57)  Die Erfindung betrifft ein System (11) und ein Verfahren zur Geschwindigkeitsüberwachung von Fahrzeugen (12, 13), insbesondere Kraftfahrzeugen, wobei das System an einem als ein Kraftfahrzeug ausgebildeten Überwachungsfahrzeug (10) anordbar ist, wobei das System zumindest eine Sensorvorrichtung (14, 15) umfasst, wobei mittels der Sensorvorrichtung zumindest zwei, vorzugsweise zumindest drei, Strahlen (16, 17, 18, 19, 20, 21) aus, vorzugsweise gepulstem, Licht aussendbar sind, wobei bei dem an dem Überwachungsfahrzeug angeordneten System betrachtet die ausgesendeten Strahlen seitlich zu dem Überwachungsfahrzeug und entlang einer Längsachse (22) des Überwachungsfahrzeugs betrachtet jeweils voneinander beabstandet verlaufen, wobei bei einer Vorbeibewegung eines Fahrzeugs an dem Überwachungsfahrzeug relativ zu dem Überwachungsfahrzeug die ausgesendeten Strahlen von zumindest einem Teil des Fahrzeugs nacheinander durchquerbar sind, wobei bei dem Durchqueren der ausgesendeten Strahlen die ausgesendeten Strahlen an dem Fahrzeug reflektierbar sind, wobei mittels der Sensorvorrichtung reflektierte Strahlen aus dem Licht empfangbar und aus den reflektierten Strahlen Empfangssignale erzeugbar sind, wobei das System eine Verarbeitungsvorrichtung umfasst, wobei mittels der Verarbeitungsvorrichtung anhand der Empfangssignale eine Differenzgeschwindigkeit des Fahrzeugs zu dem Überwachungsfahrzeug ermittelbar ist.

**EP 4 485 420 A1**

**Beschreibung**

Die Erfindung betrifft ein System und ein Verfahren zur Geschwindigkeitsüberwachung von Fahrzeugen.

Aus der Praxis sind verschiedene Systeme zur Geschwindigkeitsüberwachung von Fahrzeugen bekannt. Solche Systeme werden regelmäßig zur Geschwindigkeitsüberwachung von Kraftfahrzeugen im öffentlichen Straßenverkehr eingesetzt. Es handelt sich um eine Kontrollmaßnahme von Polizei oder anderen Behörden zur Überwachung einer Einhaltung einer zulässigen Höchstgeschwindigkeit.

Unter solchen Systemen gibt es stationäre Systeme, welche stets an feste Orte gebunden sind. Eine Messung einer Geschwindigkeit von Fahrzeugen bei stationären Systemen erfolgt üblicherweise mittels Radar, Laser oder einer Abschnittskontrolle.

Da eine Abschreckwirkung der stationären Systeme auf, insbesondere ortskundige, Verkehrsteilnehmer eher gering ist, gibt es unter solchen Systemen weiter mobile Systeme, welche es ermöglichen, Orte einer Geschwindigkeitsüberwachung weitgehend flexibel und für Verkehrsteilnehmer im Wesentlichen unvorhersehbar wählen zu können.

Unter den mobilen Systemen gibt es mobile Systeme, welche derart ausgebildet sind, dass sie sich während einer Geschwindigkeitsüberwachung in Ruhe befinden. Eine Geschwindigkeitsüberwachung mittels derartiger mobiler Systeme erfolgt dann typischerweise von einem Straßenrand aus. Dabei sind die derartigen mobilen Systeme regelmäßig direkt an dem Straßenrand oder in einem an dem Straßenrand ruhenden Fahrzeug, Kraftfahrzeug oder Anhänger, angeordnet. Es ist daher zur Durchführung einer Geschwindigkeitsüberwachung mittels derartiger mobiler Systeme in der Regel erforderlich, die derartigen mobilen Systeme zu einem Ort einer Geschwindigkeitsüberwachung zu transportieren, an dem Ort aufzubauen sowie auszurichten und nach der Durchführung der Geschwindigkeitsüberwachung abzubauen und von dem Ort abzutransportieren. Dies ist mit einem hohen Aufwand verbunden. Eine Messung einer Geschwindigkeit von Fahrzeugen bei derartigen mobilen Systemen erfolgt üblicherweise mittels Radar, Laser, Lichtschranken oder Helligkeitssensoren. Aus dem Umstand, dass sich derartige mobile Systeme während einer Geschwindigkeitsüberwachung in Ruhe befinden, ergibt sich zwar eine wesentliche Vereinfachung der Messung der Geschwindigkeit der Fahrzeuge, allerdings ergibt sich daraus auch ein eingeschränkter Einsatzbereich mit vergleichsweise wenig Flexibilität derartiger mobiler Systeme.

Weiter gibt es unter den mobilen Systemen auch mobile Systeme, welche derart ausgebildet sind, dass sie sich während einer Geschwindigkeitsüberwachung in Bewegung befinden. Derartige mobile Systeme sind üblicherweise in einem als ein Kraftfahrzeug ausgebildeten Überwachungsfahrzeug angeordnet und zur Messung einer Geschwindigkeit von Fahrzeugen durch Nachfahren ausgebildet. Zur Durchführung einer Messung einer Geschwindigkeit eines Fahrzeugs hält das Überwachungsfahrzeug über eine bestimmte Strecke einen festen Abstand zu dem zu geschwindigkeitsüberwachenden Fahrzeug. Eine Geschwindigkeit des Überwachungsfahrzeugs wird über einen typischerweise geeichten Tachometer des Überwachungsfahrzeugs ermittelt, wobei sich die Geschwindigkeit des Fahrzeugs im Wesentlichen direkt aus der Geschwindigkeit des Überwachungsfahrzeugs ergibt. Bei der Geschwindigkeitsüberwachung wird das Fahrzeug mittels einer Kameravorrichtung des Systems aufgenommen. Die Geschwindigkeitsüberwachung durch Nachfahren, bei der das Überwachungsfahrzeug einem zu geschwindigkeitsüberwachenden Fahrzeug regelmäßig mit einer vergleichsweise hohen Geschwindigkeit nachfahren muss, ist für Insassen des Überwachungsfahrzeugs mit einem nicht unerheblichen Risiko verbunden. Weiter erfordert die Geschwindigkeitsüberwachung durch Nachfahren eine ausreichend hohe Motorisierung des Überwachungsfahrzeugs, um einem zu geschwindigkeitsüberwachenden Fahrzeug auch bei einer vergleichsweise hohen Geschwindigkeit des Fahrzeugs nachfahren zu können, was kostenintensiv ist. Ferner können bedingt dadurch, dass einem zu geschwindigkeitsüberwachenden Fahrzeug eine vergleichsweise lange Zeit nachgefahren werden muss, innerhalb einer gegebenen Zeit nur vergleichsweise wenige Fahrzeuge insgesamt geschwindigkeitsüberwacht werden.

Der vorliegenden Erfindung liegt daher die Aufgabe zugrunde, ein System und ein Verfahren vorzuschlagen, das eine ortsunabhängige, einfache, flexible, risikoarme, kostengünstige und effektive Geschwindigkeitsüberwachung von Fahrzeugen, insbesondere Kraftfahrzeugen, insbesondere im öffentlichen Straßenverkehr, ermöglicht.

Diese Aufgabe wird durch ein System mit den Merkmalen des Anspruchs 1 und ein Verfahren mit den Merkmalen des Anspruchs 12 gelöst.

Das erfindungsgemäße System zur Geschwindigkeitsüberwachung von Fahrzeugen, insbesondere Kraftfahrzeugen, ist an einem als ein Kraftfahrzeug ausgebildeten Überwachungsfahrzeug anordbar, wobei das System zumindest eine Sensorvorrichtung umfasst, wobei mittels der Sensorvorrichtung zumindest zwei, vorzugsweise zumindest drei, Strahlen aus, vorzugsweise gepulstem, Licht aussendbar sind, wobei bei dem an dem Überwachungsfahrzeug angeordneten System betrachtet die ausgesendeten Strahlen seitlich zu dem Überwachungsfahrzeug und entlang einer Längsachse des Überwachungsfahrzeugs betrachtet jeweils voneinander beabstandet verlaufen, wobei bei einer Vorbeibewegung eines Fahrzeugs an dem Überwachungsfahrzeug relativ zu dem Überwachungsfahrzeug die ausgesendeten Strahlen von zumindest einem Teil des Fahrzeugs nacheinander durchquerbar sind, wobei bei dem Durchqueren der ausgesendeten Strahlen die ausgesendeten Strahlen an dem Fahrzeug reflektierbar sind, wobei mittels der Sensorvorrichtung reflektierte Strahlen aus dem Licht empfangbar und aus den reflektierten Strahlen Empfangssignale erzeugbar sind, wobei das System eine Verarbeitungsvorrichtung umfasst, wobei mittels der Verarbeitungsvorrichtung anhand der Empfangssignale eine Differenzgeschwindigkeit des Fahrzeugs zu dem Überwachungsfahrzeug ermittelbar ist.

Demnach ist das zur Geschwindigkeitsüberwachung von Fahrzeugen, insbesondere Kraftfahrzeugen, insbesondere im öffentlichen Straßenverkehr, ausgebildete System an einem als ein Kraftfahrzeug ausgebildeten Überwachungsfahrzeug anordbar, insbesondere fest installierbar. Dabei ist das Überwachungsfahrzeug mit dem an dem Überwachungsfahrzeug angeordneten System bei der Geschwindigkeitsüberwachung der Fahrzeuge fahrbar. Mit anderen Worten ist das System derart ausgebildet, dass die Geschwindigkeitsüberwachung insbesondere auch bei dem bei dem fahrenden Überwachungsfahrzeug sich bewegenden System durchführbar ist. Dazu umfasst das System zumindest eine Sensorvorrichtung, wobei mittels der Sensorvorrichtung zumindest zwei, vorzugsweise zumindest drei, Strahlen aus, vorzugsweise gepulstem, Licht, das heißt Lichtstrahlen, aussendbar sind, wobei bei dem an dem Überwachungsfahrzeug angeordneten System betrachtet die ausgesendeten Strahlen seitlich zu dem Überwachungsfahrzeug, das heißt auf einer Seite des Überwachungsfahrzeugs, und entlang einer Längsachse des Überwachungsfahrzeugs betrachtet jeweils voneinander beabstandet verlaufen. Die Sensorvorrichtung kann eine Sendeeinrichtung zum Aussenden der Strahlen umfassen. Eine Anzahl der mittels der Sensorvorrichtung aussendbaren derartigen Strahlen beträgt zumindest zwei, also beispielsweise zwei, drei, vier, fünf oder mehr. Die ausgesendeten Strahlen können parallel zueinander in festen Abständen voneinander verlaufen. Unter dem Begriff "Licht" ist vorliegend elektromagnetische Strahlung in einem beliebigen Frequenzbereich zu verstehen. Insbesondere kann es sich bei dem Licht um mit bloßem Auge sichtbares Licht, infrarotes Licht, ultraviolettes Licht oder um eine in einem Radiofrequenzbereich liegende Frequenz aufweisende elektromagnetische Strahlung, insbesondere Radarstrahlung, handeln. Vorzugsweise können die ausgesendeten Strahlen bzw. das Licht jeweils aus Lichtpulsen gebildet werden. Mittels der Sensorvorrichtung kann das Fahrzeug erfasst werden. Die ausgesendeten Strahlen können als Messstrahlen dienen. Die ausgesendeten Strahlen können einen Erfassungsbereich der Sensorvorrichtung definieren. Dabei können zwei entlang der Längsrichtung betrachtet äußere Strahlen der ausgesendeten Strahlen den Erfassungsbereich in einer Längsrichtung des Überwachungsfahrzeugs bzw. entlang der Längsachse begrenzen. Eine Reichweite der Sensorvorrichtung bzw. der ausgesendeten Strahlen kann den Erfassungsbereich in einer Querrichtung des Überwachungsfahrzeugs bzw. entlang einer Querachse des Überwachungsfahrzeugs begrenzen. Das Fahrzeug kann bei einem Eintritt des Fahrzeugs in den Erfassungsbereich erfasst werden. Bei einer Vorbeibewegung des Fahrzeugs an dem Überwachungsfahrzeug relativ zu dem Überwachungsfahrzeug, bei der sich das relativ zu dem Überwachungsfahrzeug bewegende Fahrzeug seitlich an dem Überwachungsfahrzeug vorbeibewegt, insbesondere bei einem Passieren bzw. Überholen des Überwachungsfahrzeugs durch das Fahrzeug, sind die ausgesendeten Strahlen bzw. Verläufe der ausgesendeten Strahlen von zumindest einem Teil des Fahrzeugs, insbesondere einem Anfang bzw. einer Front des Fahrzeugs oder einem Ende bzw. einem Heck des Fahrzeugs, vorzugsweise von dem gesamten Fahrzeug, in einer Bewegungsrichtung des Fahrzeugs betrachtet zeitlich nacheinander durchquerbar bzw. durchfahrbar. Dabei ist es möglich, dass nur das Fahrzeug fährt, nur das Überwachungsfahrzeug fährt oder sowohl das Fahrzeug als auch das Überwachungsfahrzeug fahren. Weiter ist es möglich, dass das Fahrzeug und das Überwachungsfahrzeug in gleiche Fahrtrichtungen oder in entgegengesetzte Fahrtrichtungen fahren. In allen der vorgenannten Fälle kann eine Vorbeibewegung des Fahrzeugs an dem Überwachungsfahrzeug erfolgen. Die ausgesendeten Strahlen sind reflektierbar. Bei einem Auftreffen der ausgesendeten Strahlen auf zumindest eine Oberfläche bzw. zumindest ein Objekt bzw. Objekte sind die Strahlen an der Oberfläche bzw. dem Objekt bzw. den Objekten reflektierbar. Die Objekte können Fahrzeuge, insbesondere das Fahrzeug bzw. andere Fahrzeuge als das zu geschwindigkeitsüberwachende Fahrzeug, oder alle nur erdenklichen sonstigen Objekte, insbesondere an einem Straßenrand bzw. Fahrbahnrand, sein. Bei dem Durchqueren bzw. Durchfahren der ausgesendeten Strahlen bzw. der Verläufe sind die ausgesendeten Strahlen an dem Fahrzeug reflektierbar. Mittels der Sensorvorrichtung sind sich aus Reflexionen der Strahlen, insbesondere an dem Fahrzeug bzw. sonstigen Objekten, ergebende reflektierte Strahlen aus dem Licht empfangbar. Die Sensorvorrichtung kann eine Empfangseinrichtung zum Empfangen der reflektierten Strahlen umfassen. Weiter sind mittels der Sensorvorrichtung, insbesondere der Empfangseinrichtung, aus den reflektierten Strahlen Empfangssignale erzeugbar. Dabei kann aus jedem reflektierten Strahl ein Empfangssignal erzeugbar sein.

Die Empfangssignale können elektrische Signale sein. Die Empfangseinrichtung kann einen Detektor zur Wandlung der reflektierten Strahlen in die elektrischen Signale umfassen. Die Empfangssignale können Intensitäten der reflektierten Strahlen bzw. des Lichts oder Abstände von Aussendeorten der ausgesendeten Strahlen an der Sensorvorrichtung von Reflexionsorten der ausgesendeten Strahlen, insbesondere an dem Fahrzeug oder den sonstigen Objekten, beschreiben. Unter einem Aussendeort ist ein Punkt an der Sensorvorrichtung zu verstehen, wo der jeweilige Strahl ausgesendet wird, unter einem Reflexionsort ist ein Punkt an dem Fahrzeug oder einem sonstigen Objekt zu verstehen, wo der jeweilige ausgesendete Strahl reflektiert wird. Die Abstände können mittels der Sensorvorrichtung bzw. Empfangseinrichtung aus Laufzeiten der ausgesendeten und reflektierten Strahlen bzw. des Lichts ermittelt werden. Die Laufzeiten können anhand von Empfangszeiten der reflektierten Strahlen bzw. von reflektierten Lichtpulsen und anhand von Sendezeiten der ausgesendeten Strahlen bzw. von ausgesendeten Lichtpulsen ermittelt werden. Die Empfangssignale können sich in Abhängigkeit davon, ob von an dem Fahrzeug reflektierte Strahlen empfangen werden oder nicht, ändern. Dabei kann eine Reflexion der ausgesendeten Strahlen an anderen Objekten als an dem Fahrzeug und ein Empfangen von entsprechenden reflektierten Strahlen zu anderen Empfangssignalen, insbesondere kleineren Intensitäten bzw. größeren Abständen, führen, als eine Reflexion der ausgesendeten Strahlen an dem Fahrzeug und ein Empfangen von entsprechenden reflektierten Strahlen. Anhand der Empfangssignale kann daher auf einen Aufenthalt des Fahrzeugs in den ausgesendeten Strahlen bzw. Verläufen geschlossen werden. Anhand der Empfangssignale kann somit das Fahrzeug erfasst werden. Das System umfasst eine Verarbeitungsvorrichtung, wobei mittels der Verarbeitungsvorrichtung die, insbesondere die Intensitäten oder Abstände beschreibenden, Empfangssignale, vorzugsweise kontinuierlich, ausgewertet werden können. Die Verarbeitungseinrichtung kann aus den die Abstände beschreibenden Empfangssignalen einen Abstand des Fahrzeugs von dem Überwachungsfahrzeug entlang der Querachse betrachtet, beispielsweise als Mittelwert der Abstände, bestimmen. Insofern die Empfangssignale die Abstände nicht beschreiben, können mittels der Verarbeitungsvorrichtung anhand der Empfangssignale aus einer Ermittlung von den Laufzeiten die Abstände ermittelt werden. Die Verarbeitungseinrichtung kann ermitteln, ob die Abstände bzw. der Abstand in einem, vorzugsweise festlegbaren bzw. programmierbaren, Abstandsbereich liegen bzw. liegt, um so das Fahrzeug und gegebenenfalls einen durch den Abstandsbereich definierten Fahrstreifen, auf dem sich das Fahrzeug befindet, zu erkennen. Weiter kann die Verarbeitungsvorrichtung anhand der Abstände bzw. des Abstands erkennen, ob sich während der Geschwindigkeitsüberwachung des Fahrzeugs ein anderes Fahrzeug zwischen das zu geschwindigkeitsüberwachende Fahrzeug und das Überwachungsfahrzeug bewegt und somit die Geschwindigkeitsüberwachung verfälscht. Anhand der Empfangssignale ist mittels der Verarbeitungsvorrichtung eine Differenzgeschwindigkeit des Fahrzeugs zu dem Überwachungsfahrzeug ermittelbar. Bei der Differenzgeschwindigkeit des Fahrzeugs zu dem Überwachungsfahrzeug handelt es sich um eine Geschwindigkeit des Fahrzeugs relativ zu dem Überwachungsfahrzeug. Wenn das Fahrzeug die ausgesendeten Strahlen bzw. die Verläufe zeitlich nacheinander durchquert bzw. durchfährt, kann das Fahrzeug zeitlich nacheinander mit dem Anfang bzw. der Front in die ausgesendeten Strahlen bzw. Verläufe eintreten und mit dem Ende bzw. dem Heck aus den ausgesendeten Strahlen bzw. Verläufen austreten. Daher erreichen die an dem Fahrzeug reflektierten Strahlen die Sensorvorrichtung zeitlich nacheinander und werden Reflexionen der ausgesendeten Strahlen zeitlich nacheinander unterbrochen. Dies kann zu einer Änderung der Empfangssignale, insbesondere der Abstände, führen. Dabei können sich die Empfangssignale, insbesondere die Abstände, zeitlich nacheinander ändern, insbesondere abfallen und ansteigen. Anhand der Empfangssignale können daher Zeitpunkte eines Eintritts des Fahrzeugs mit dem Anfang bzw. der Front in die ausgesendeten Strahlen bzw. Verläufe und/oder Zeitpunkte eines Austritts des Fahrzeugs mit dem Ende bzw. Heck aus den ausgesendeten Strahlen bzw. Verläufen bestimmt werden. Anhand von zumindest einer Zeitdifferenz aus zwei Zeitpunkten des Eintritts des Fahrzeugs mit dem Anfang bzw. der Front in die ausgesendeten Strahlen bzw. Verläufe und zumindest einem bekannten Abstand von innerhalb der Zeitdifferenz von dem Anfang bzw. der Front durchquerten ausgesendeten Strahlen bzw. Verläufe entlang der Längsachse betrachtet und/oder zumindest eine Zeitdifferenz aus zwei Zeitpunkten des Austritts des Fahrzeugs mit dem Ende bzw. dem Heck aus den ausgesendeten Strahlen bzw. Verläufen und zumindest einem bekannten Abstand von innerhalb der Zeitdifferenz von dem Ende bzw. dem Heck durchquerten ausgesendeten Strahlen bzw. Verläufe entlang der Längsachse betrachtet kann daher die Differenzgeschwindigkeit ermittelt werden. Alternativ oder zusätzlich zur Ermittlung der Differenzgeschwindigkeit anhand der Erkennung des Anfangs bzw. der Front bzw. des Endes bzw. des Hecks kann die Ermittlung der Differenzgeschwindigkeit auch anhand einer Erkennung einer Kontur des Fahrzeugs erfolgen. Dadurch, dass das System an dem bei der Geschwindigkeitsüberwachung fahrbaren Überwachungsfahrzeug anordbar, insbesondere fest installierbar, ist, ist das System ortsunabhängig, einfach und flexibel einsetzbar. Weiter ist das System unabhängig von wechselnden Umweltbedingungen, zum Beispiel einem Bewuchs am Straßenrand, oder sich ändernden Lichtbedingungen, welche insbesondere bei einer Geschwindigkeitsüberwachung unter Verwendung von Helligkeitssensoren problematisch sein können, flexibel einsetzbar. Weiter ist dadurch, dass das Überwachungsfahrzeug bei der Geschwindigkeitsüberwachung grundsätzlich mit einer beliebigen Geschwindigkeit, welche kleiner oder gleich einer zulässigen Höchstgeschwindigkeit sein kann, fahren oder sogar ruhen kann, da kein Nachfahren bei einem zu geschwindigkeitsüberwachenden Fahrzeug erforderlich ist, ein Risiko für Insassen des Überwachungsfahrzeugs erheblich reduziert. Weiter kann, da kein Nachfahren bei einem zu geschwindigkeitsüberwachenden Fahrzeug erforderlich ist, auf eine kostenintensive erhöhte Motorisierung des Überwachungsfahrzeugs verzichtet werden. Ferner können, da kein Nachfahren bei einem zu geschwindigkeitsüberwachenden Fahrzeug erforderlich ist, innerhalb einer gegebenen Zeit vergleichsweise mehr Fahrzeuge insgesamt geschwindigkeitsüberwacht werden. Das System ermöglicht daher eine ortsunabhängige, einfache, flexible, risikoarme, kostengünstige und effektive Geschwindigkeitsüberwachung von Fahrzeugen, insbesondere Kraftfahrzeugen, insbesondere im öffentlichen Straßenverkehr.

In einer bevorzugten Ausführungsform des Systems kann als Licht Laserlicht vorgesehen sein. Die Sensorvorrichtung kann dann als eine Lidar (Light detection and ranging)-Sensorvorrichtung ausgebildet sein, das heißt als eine Sensorvorrichtung, welche nach der Lidar-Methode arbeitet.

In einer bevorzugten Ausführungsform des Systems kann die Sensorvorrichtung zumindest zwei, vorzugsweise zumindest drei, vorzugsweise als Lidarsensoren ausgebildete, Sendeempfangsmodule umfassen, wobei mittels der Sendeempfangsmodule jeweils einer der Strahlen aussendbar sein kann, wobei mittels der Sendeempfangsmodule jeweils einer der reflektierten Strahlen empfangbar sein kann. Die Sendeempfangsmodule können jeweils einen Sender und einen Empfänger umfassen. Die Sender können die Sendeeinrichtung und die Empfänger die Empfangseinrichtung zumindest mitausbilden. Der Sender und der Empfänger können bei dem jeweiligen Sendeempfangsmodul, vorzugsweise parallel, nebeneinander oder übereinander angeordnet sein. Mit anderen Worten können der ausgesendete Strahl und der sich aus diesem ergebende reflektierte Strahl jeweils, vorzugsweise parallel, nebeneinander oder übereinander verlaufen. Die Sendeempfangsmodule können als Abstandssensoren, insbesondere Lasersensoren, vorzugsweise Lidarsensoren oder ToF-Sensoren, ausgebildet sein. Die Sender können jeweils als ein Laser ausgebildet sein. Weiter können die Sendeempfangsmodule, insbesondere die Sender und/oder Empfänger, Blenden aufweisen, welche beispielsweise als Rohre ausgebildet sein können. Mittels der jeweiligen Blende kann bei dem jeweiligen Sendeempfangsmodul, insbesondere Empfänger, von den anderen Sendeempfangsmodulen möglicherweise herrührendes ausgesendetes bzw. reflektiertes Streulicht bzw. Störlicht, welches das Empfangssignal des jeweiligen Sendeempfangsmoduls bzw. Empfängers beeinflussen kann, abgeblockt werden. Vorzugsweise ist zumindest eine Innenoberfläche der Blenden bzw. Rohre aus einem nicht reflektierenden Material ausgebildet. Weiter können die Blenden bzw. Rohre als Spritzwasserschutz dienen.

In einer bevorzugten Ausführungsform des Systems können die ausgesendeten Strahlen senkrecht zu der Längsachse und/oder horizontal, vorzugsweise in einer gemeinsamen horizontalen Ebene, verlaufen. Wenn die ausgesendeten Strahlen senkrecht und horizontal verlaufen, können die ausgesendeten Strahlen parallel zu der Querachse des Überwachungsfahrzeugs verlaufen. Die ausgesendeten Strahlen können in einer Reihe verlaufen. Jeweils zueinander benachbarte ausgesendete Strahlen der ausgesendeten Strahlen können in der Reihe äquidistant, das heißt in gleichen Abständen zueinander, verlaufen. Die ausgesendeten Strahlen können auch fächerförmig verlaufen.

In einer bevorzugten Ausführungsform des Systems kann das System eine Geschwindigkeitsmessvorrichtung zur Messung einer Geschwindigkeit des Überwachungsfahrzeugs umfassen, wobei mittels der Verarbeitungsvorrichtung aus der Differenzgeschwindigkeit des Fahrzeugs relativ zu dem Überwachungsfahrzeug und der Geschwindigkeit des Überwachungsfahrzeugs eine Geschwindigkeit des Fahrzeugs ermittelbar sein kann. Bei der Geschwindigkeit des Überwachungsfahrzeugs und der Geschwindigkeit des Fahrzeugs handelt es sich um Absolutgeschwindigkeiten. Die Absolutgeschwindigkeiten beziehen sich auf ein relativ zur Erde ruhendes Bezugssystem, insbesondere Untergrund des Überwachungsfahrzeugs bzw. Fahrzeugs, beispielsweise Straße. Es wäre auch denkbar, die Geschwindigkeit des Überwachungsfahrzeugs mittels der Sensorvorrichtung aus einer Korrelation einer Änderung der ermittelten Abstände zu der Umgebung während der Fahrt zu ermitteln.

In einer bevorzugten Ausführungsform des Systems kann die Geschwindigkeitsmessvorrichtung zumindest einen optischen Geschwindigkeitssensor umfassen. Durch die Verwendung eines optischen Geschwindigkeitssensors ist kein geeichtes Tachometer des Überwachungsfahrzeugs zur Messung der Geschwindigkeit des Überwachungsfahrzeugs erforderlich. Weiter entfallen bei dem Überwachungsfahrzeug eine Kontrolle eines Reifendrucks, eine Kontrolle einer Profiltiefe und eine erneute Eichung des Tachometers nach einem Reifenwechsel. Der optische Geschwindigkeitssensor kann eine Sendeeinheit zum Aussenden von, vorzugsweise kohärentem, Licht, insbesondere Laserlicht oder Radarlicht, in Richtung einer Fahrbahnoberfläche und eine Empfangseinheit zum Empfangen des von dem an der Fahrbahnoberfläche reflektierten Lichts umfassen. Die Empfangseinheit kann einen Interferenz-Detektor aufweisen, der dazu ausgebildet sein kann, eine die Geschwindigkeit des Überwachungsfahrzeugs beschreibende Messgröße zu erfassen, die eine Interferenz zwischen dem reflektierten Licht und dem ausgesendeten Licht charakterisieren kann. Der optische Geschwindigkeitssensor kann mit einer Auswerteeinrichtung der Geschwindigkeitsmessvorrichtung gekoppelt sein, die dazu ausgebildet sein kann, aus der Messgröße die Geschwindigkeit des Überwachungsfahrzeugs zu bestimmen. Grundsätzlich ist es jedoch auch denkbar, dass mittels der Verarbeitungsvorrichtung aus der Differenzgeschwindigkeit des Fahrzeugs zu dem Überwachungsfahrzeug und einer mittels eines, vorzugsweise geeichten, auf einer Drehzahlmessung basierenden Tachometers der Geschwindigkeitsmessvorrichtung messbaren Geschwindigkeit des Überwachungsfahrzeugs eine Geschwindigkeit des Fahrzeugs ermittelbar sein kann. Demnach kann die Geschwindigkeitsmessvorrichtung ein Tachometer bzw. Drehzahlmesser umfassen.

In einer bevorzugten Ausführungsform des Systems kann das System eine inertiale Messvorrichtung (IMU) mit zumindest einem Beschleunigungssensor und/oder zumindest einem Drehratensensor und/oder eine Empfangsvorrichtung für ein globales Navigationssatellitensystem (GNSS) umfassen. Die Geschwindigkeitsmessvorrichtung kann die inertiale Messvorrichtung und/oder die Empfangsvorrichtung umfassen. Mittels der inertialen Messvorrichtung und/oder der Empfangsvorrichtung kann alternativ oder zusätzlich zu der Messung der Geschwindigkeit des Überwachungsfahrzeugs mittels des optischen Geschwindigkeitssensors die Geschwindigkeit des Überwachungsfahrzeugs gemessen werden. Wenn der optische Geschwindigkeitssensor, die inertiale Messvorrichtung und die Empfangsvorrichtung gemeinsam zur Bestimmung der Geschwindigkeit des Überwachungsfahrzeugs verwendet werden, können eine Messgenauigkeit bzw. Messsicherheit erhöht werden. Weiter kann mittels der inertialen Messvorrichtung und/oder der Empfangsvorrichtung die Differenzgeschwindigkeit des zu geschwindigkeitsüberwachenden Fahrzeugs korrigiert werden. Da die Geschwindigkeitsüberwachung infolge einer Kurvenfahrt des Überwachungsfahrzeugs bzw. des Fahrzeugs verfälscht sein kann, können Daten der inertialen Messvorrichtung und/oder Daten der Empfangsvorrichtung bei der Ermittlung der Differenzgeschwindigkeit berücksichtigt werden, wodurch die Differenzgeschwindigkeit des zu geschwindigkeitsüberwachenden Fahrzeugs korrigiert werden kann. Mittels der Empfangsvorrichtung kann auch ein Ort der Geschwindigkeitsüberwachung ermittelt werden.

In einer bevorzugten Ausführungsform des Systems kann das System eine Kameravorrichtung zur Aufnahme zumindest eines Teils einer Umgebung des Überwachungsfahrzeugs umfassen. Die Aufnahme kann eine Fotoaufnahme und/oder Videoaufnahme sein. Vorzugsweise ist die Kameravorrichtung eine Video-Kameravorrichtung. Dabei kann eine Aufnahme bezogen auf eine Fahrtrichtung des Überwachungsfahrzeugs betrachtet zu der Seite, auf der die ausgesendeten Strahlen verlaufen, und/oder zu der anderen Seite und/oder nach hinten und/oder nach vorne erfolgen. Das Fahrzeug, insbesondere ein Kraftfahrzeug-Kennzeichen des Fahrzeugs, wenn das Fahrzeug als Kraftfahrzeug ausgebildet ist, und/oder ein Gesicht eines Führers bzw. Fahrers des Fahrzeugs kann mittels der Kameravorrichtung aufgenommen werden. Dabei kann ein gesamter Prozess der Vorbeibewegung bzw. des Überholens mittels der Kameravorrichtung aufgenommen werden. Die Kameravorrichtung kann eine Belichtungseinrichtung, vorzugsweise ein Schwarzblitzgerät, umfassen, um beispielsweise Aufnahmen bei Nacht machen zu können. Weiter kann das System eine Radarvorrichtung umfassen. Mittels der Radarvorrichtung kann das ankommende Fahrzeug schon frühzeitig erfasst werden. Die Radarvorrichtung kann eine hintere und optional vordere Umgebung des Überwachungsfahrzeugs erfassen. Mittels der Radarvorrichtung können sowohl Abstände als auch Geschwindigkeiten der Fahrzeuge gemessen werden. Auch kann zumindest grob ein Abstand zwischen Fahrzeugen ermittelt werden. Alternativ oder zusätzlich kann das System einen Laserscanner bzw. einen rotierenden Laser umfassen. Dieser kann zur Ermittlung von Abständen der Fahrzeuge, insbesondere von Lastkraftfahrzeugen, und gegebenenfalls von Geschwindigkeiten der Fahrzeuge dienen. Die Radarvorrichtung bzw. der Laserscanner kann auf einem Dach des Überwachungsfahrzeugs angeordnet sein.

In einer bevorzugten Ausführungsform des Systems kann das System eine Datenspeichervorrichtung zum, vorzugsweise verschlüsselbaren, Speichern von das Fahrzeug betreffenden Daten, insbesondere Geschwindigkeitsdaten, umfassen. Weiter können mittels der Speichervorrichtung Ortsdaten, Zeitdaten, Streckendaten, Fotodaten und/oder Videodaten, vorzugsweise verschlüsselbar, speicherbar sein.

In einer bevorzugten Ausführungsform des Systems kann das System eine weitere Sensorvorrichtung umfassen, wobei mittels des Systems zumindest zwei Fahrzeuge gleichzeitig geschwindigkeitsüberwachbar sein können. Die Sensorvorrichtung kann zur Geschwindigkeitsüberwachung bzw. Erfassung eines auf einer ersten Seite des Überwachungsfahrzeugs befindlichen ersten Fahrzeugs und die weitere Sensorvorrichtung zur Geschwindigkeitsüberwachung bzw. Erfassung eines auf einer zweiten Seite des Überwachungsfahrzeugs befindlichen zweiten Fahrzeugs dienen.

Die Sensorvorrichtung kann bevorzugt seitlich, aber auch hinten, beispielsweise an einem an dem Überwachungsfahrzeug anordbaren Träger, oder vorne an dem Überwachungsfahrzeug angeordnet sein. Weiter ist eine Anordnung der Sensorvorrichtung unter dem Überwachungsfahrzeug denkbar. Es kann dann eine Reflexion der ausgesendeten Strahlen an Rädern des Fahrzeugs erfolgen.

Weitere vorteilhafte Ausführungsformen des Systems ergeben sich aus den Merkmalsbeschreibungen der auf den Verfahrensanspruch 12 rückbezogenen Unteransprüche.

Das erfindungsgemäße als ein Kraftfahrzeug ausgebildete Überwachungsfahrzeug umfasst ein erfindungsgemäßes System. Das Kraftfahrzeug kann als ein normales Kraftfahrzeug oder als ein Einsatzfahrzeug ausgebildet sein.

Bei dem erfindungsgemäßen Verfahren zur Geschwindigkeitsüberwachung von Fahrzeugen, insbesondere Kraftfahrzeuge, mittels eines Systems, ist das System an einem als ein Kraftfahrzeug ausgebildeten Überwachungsfahrzeug angeordnet, wobei mittels zumindest einer Sensorvorrichtung des Systems zumindest zwei, vorzugsweise zumindest drei, Strahlen aus, vorzugsweise gepulstem, Licht ausgesendet werden, wobei die ausgesendeten Strahlen seitlich zu dem Überwachungsfahrzeug und entlang einer Längsachse des Überwachungsfahrzeugs betrachtet jeweils voneinander beabstandet verlaufen, wobei bei einer Vorbeibewegung eines Fahrzeugs an dem Überwachungsfahrzeug relativ zu dem Überwachungsfahrzeug die ausgesendeten Strahlen von zumindest einem Teil des Fahrzeugs nacheinander durchquert werden, wobei bei dem Durchqueren der ausgesendeten Strahlen die ausgesendeten Strahlen an dem Fahrzeug reflektiert werden, wobei mittels der Sensorvorrichtung reflektierte Strahlen aus dem Licht empfangen und aus den reflektierten Strahlen Empfangssignale erzeugt werden, wobei mittels einer Verarbeitungsvorrichtung des Systems anhand der Empfangssignale eine Differenzgeschwindigkeit des Fahrzeugs zu dem Überwachungsfahrzeug ermittelt wird.

Zu den vorteilhaften Wirkungen des erfindungsgemäßen Verfahrens wird auf die Vorteilsbeschreibung des erfindungsgemäßen Systems verwiesen.

In einer bevorzugten Ausführungsform des Verfahrens können mittels der Verarbeitungsvorrichtung anhand der Empfangssignale Zeitpunkte eines Eintritts des Fahrzeugs mit einem Anfang des Fahrzeugs in die ausgesendeten Strahlen und/oder Zeitpunkte eines Austritts des Fahrzeugs mit einem Ende des Fahrzeugs aus den ausgesendeten Strahlen bestimmt werden. Bei zwei ausgesendeten Strahlen ergeben sich zwei Zeitpunkte des Eintritts und zwei Zeitpunkte des Austritts. Bei drei ausgesendeten Strahlen ergeben sich drei Zeitpunkte des Eintritts und drei Zeitpunkte des Austritts. Allgemein ergeben sich bei n ausgesendeten Strahlen, wobei n eine beliebige natürliche Zahl sein kann, n Zeitpunkte des Eintritts und n Zeitpunkte des Austritts.

In einer bevorzugten Ausführungsform des Verfahrens kann anhand von zumindest einer Zeitdifferenz aus zwei Zeitpunkten des Eintritts des Fahrzeugs mit dem Anfang in die ausgesendeten Strahlen und zumindest einem Abstand von innerhalb der Zeitdifferenz von dem Anfang durchquerten ausgesendeten Strahlen und/oder zumindest einer Zeitdifferenz aus zwei Zeitpunkten des Austritts des Fahrzeugs mit dem Ende aus den ausgesendeten Strahlen und zumindest einem Abstand von innerhalb der Zeitdifferenz von dem Ende durchquerten ausgesendeten Strahlen die Differenzgeschwindigkeit ermittelt werden. Vorzugsweise können dabei alle möglichen Zeitdifferenzen aus jeweils zwei Zeitpunkten des Eintritts bzw. des Austritts verwendet werden. Bei zwei ausgesendeten Strahlen ergibt sich aus den zwei Zeitpunkten des Eintritts und den zwei Zeitpunkten des Austritts jeweils eine mögliche Zeitdifferenz. Bei drei ausgesendeten Strahlen ergeben sich aus den drei Zeitpunkten des Eintritts und den drei Zeitpunkten des Austritts jeweils drei mögliche Zeitdifferenzen. Insgesamt ergeben sich also sechs mögliche Zeitdifferenzen. Allgemein ergeben sich bei n ausgesendeten Strahlen, wobei n eine beliebige natürliche Zahl sein kann, aus den n Zeitpunkten des Eintritts und den n Zeitpunkten des Austritts jeweils $\binom{n}{2}$ mögliche Zeitdifferenzen. Insgesamt ergeben sich also $2 \times \binom{n}{2}$ mögliche Zeitdifferenzen. Eine Mehrzahl von zumindest drei ausgesendeten Strahlen und damit verbundene mehrere Zeitpunkte des Eintritts bzw. Austritts und mehrere mögliche Zeitdifferenzen aus jeweils zwei Zeitpunkten des Eintritts bzw. Austritts ermöglichen eine Kontrolle, um Fehler ausschließen zu können und Genauigkeitsangaben zu machen. Aus jeder Zeitdifferenz und einem Abstand bzw. Abständen von innerhalb der Zeitdifferenz von dem Anfang bzw. Ende durchquerten ausgesendeten Strahlen bzw. einem Abstand von zwei äußeren Strahlen der innerhalb der Zeitdifferenz von dem Anfang bzw. Ende durchquerten ausgesendeten Strahlen kann eine einzelne Differenzgeschwindigkeit ermittelt werden. Demnach kann aus jeder Zeitdifferenz und dem bekannten Abstand zwischen den dazugehörigen Strahlen bzw. Messstrahlen, zwischen denen die Zeitdifferenz beim Durchfahren des Fahrzeugs gebildet wird, eine einzelne Differenzgeschwindigkeit ermittelt werden. Die einzelnen Differenzgeschwindigkeiten können mittels der Verarbeitungsvorrichtung miteinander verglichen werden. Wenn die einzelnen Differenzgeschwindigkeiten innerhalb einer Toleranz übereinstimmen kann die Verarbeitungsvorrichtung darauf schließen, dass kein Fehler vorliegt. Wenn die einzelnen Differenzgeschwindigkeiten innerhalb einer Toleranz nicht übereinstimmen kann die Verarbeitungsvorrichtung darauf schließen, dass ein Fehler vorliegt. Die Differenzgeschwindigkeit kann mittels der Verarbeitungsvorrichtung als Mittelwert der einzelnen Differenzgeschwindigkeiten ermittelt werden. Beispielsweise kann sich bei drei ausgesendeten Strahlen die Differenzgeschwindigkeit aus einem Mittelwert von sechs einzelnen Differenzgeschwindigkeiten ergeben.

In einer bevorzugten Ausführungsform des Verfahrens können mittels der Sensorvorrichtung aus einer Ermittlung von Laufzeiten der ausgesendeten und reflektierten Strahlen bzw. des Lichts Abstände von Aussendeorten der ausgesendeten Strahlen an der Sensorvorrichtung von Reflexionsorten der ausgesendeten Strahlen, insbesondere an dem Fahrzeug oder sonstigen Objekten, ermittelt werden. Die Empfangssignale können die Abstände der Aussendeorte von den Reflexionsorten beschreiben. Vorzugsweise kann das Licht dann gepulst sein, so dass die ausgesendeten Strahlen aus Lichtpulsen gebildet sein können. Aus einer Ermittlung von Laufzeiten der Lichtpulse können dann die Abstände ermittelt werden. Wenn die Sensorvorrichtung die Sendeempfangsmodule umfasst, können aus der Ermittlung der Laufzeiten der ausgesendeten und reflektierten Strahlen bzw. des Lichts Abstände der Sendeempfangsmodule bzw. der Sender der Sendeempfangsmodule zu den Reflexionsorten ermittelt werden. Die Sendeempfangsmodule bzw. Sender können die Aussendeorte aufweisen. Die Laufzeiten können anhand von Empfangszeiten der reflektierten Strahlen bzw. reflektierten Lichtpulse und anhand von Sendezeiten der ausgesendeten Strahlen bzw. ausgesendeten Lichtpulse ermittelt werden. Mittels der Verarbeitungsvorrichtung können die ermittelten Abstände, vorzugsweise kontinuierlich, ausgewertet werden. Anhand der Abstände bzw. einer Änderung der Abstände kann die Verarbeitungsvorrichtung die Zeitpunkte des Eintritts des Fahrzeugs mit dem Anfang in die ausgesendeten Strahlen und/oder die Zeitpunkte des Austritts des Fahrzeugs mit dem Ende aus den ausgesendeten Strahlen bestimmen. Die Verarbeitungsvorrichtung kann also anhand der Abstände erkennen, ob sich ein Fahrzeug an dem Überwachungsfahrzeug vorbeibewegt bzw. in dem Erfassungsbereich befindet. Weiter kann die Verarbeitungsvorrichtung anhand der Abstände erkennen, ob sich während der Geschwindigkeitsüberwachung eines Fahrzeugs ein anderes Fahrzeug zwischen das zu geschwindigkeitsüberwachende Fahrzeug und das Überwachungsfahrzeug bewegt und somit die Geschwindigkeitsüberwachung verfälscht.

In einer bevorzugten Ausführungsform des Verfahrens kann anhand der Abstände der Aussendeorte von den Reflexionsorten an dem Fahrzeug ein Fahrstreifen, auf welchem das Fahrzeug fährt, ermittelt bzw. erkannt werden. Die Fahrstreifen können durch, vorzugsweise festlegbare bzw. programmierbare, Abstandsbereiche definiert werden. Beispielsweise kann sich eine erste Fahrspur in einem ersten Abstandsbereich zwischen 0,2 m und 3 m und eine zweite Fahrspur in einem zweiten Abstandsbereich zwischen 3 m und 6 m seitlich zu dem Überwachungsfahrzeug befinden. Die Abstandsbereiche können dynamisch während der Fahrt veränderbar sein, zum Beispiel bei Engstellen.

In einer bevorzugten Ausführungsform des Verfahrens können Daten einer zumindest einen Beschleunigungssensor und/oder zumindest einen Drehratensensor umfassenden inertialen Messvorrichtung des Systems und/oder Daten einer für ein globales Navigationssatellitensystem vorgesehenen Empfangsvorrichtung des Systems bei der Ermittlung der Differenzgeschwindigkeit des Fahrzeugs zu dem Überwachungsfahrzeug berücksichtigt werden und/oder bei einer Messung einer Geschwindigkeit des Überwachungsfahrzeugs berücksichtigt oder zu der Messung der Geschwindigkeit des Überwachungsfahrzeugs verwendet werden.

In einer bevorzugten Ausführungsform des Verfahrens kann das Überwachungsfahrzeug bei der Geschwindigkeitsüberwachung fahren. Alternativ ist die Geschwindigkeitsüberwachung jedoch auch bei dem stillstehenden bzw. ruhenden Überwachungsfahrzeug möglich.

In einer bevorzugten Ausführungsform des Verfahrens können eine Fahrtrichtung des Überwachungsfahrzeugs und Fahrtrichtungen der Fahrzeuge bzw. des Fahrzeugs zueinander identisch und/oder entgegengesetzt sein. Das Verfahren kann daher sowohl zur Geschwindigkeitsüberwachung von das Überwachungsfahrzeug überholenden Fahrzeugen, insbesondere bei mehrspurigen Straßen bzw. Richtungsfahrbahnen, als auch zur Geschwindigkeitsüberwachung von dem Überwachungsfahrzeug entgegenkommenden Fahrzeugen, insbesondere bei Landstraßen, eingesetzt werden.

In einer bevorzugten Ausführungsform des Verfahrens kann mittels einer Geschwindigkeitsmessvorrichtung des Systems eine Geschwindigkeit des Überwachungsfahrzeugs gemessen werden, wobei mittels der Verarbeitungsvorrichtung aus der Differenzgeschwindigkeit des Fahrzeugs zu dem Überwachungsfahrzeug und der Geschwindigkeit des Überwachungsfahrzeugs eine Geschwindigkeit des Fahrzeugs ermittelt werden kann, wobei mittels der Verarbeitungsvorrichtung die Geschwindigkeit des Fahrzeugs, vorzugsweise nach einem Toleranzabzug, mit einer Grenzgeschwindigkeit, vorzugsweise zulässige Höchstgeschwindigkeit, verglichen werden kann, wobei bei einem Überschreiten der Grenzgeschwindigkeit mittels einer Datenspeichervorrichtung des Systems das Fahrzeug betreffende Daten, insbesondere Geschwindigkeitsdaten, vorzugsweise verschlüsselt, gespeichert werden können. Die Geschwindigkeit des Fahrzeugs kann sich durch Addition der Differenzgeschwindigkeit des Fahrzeugs und der Geschwindigkeit des Überwachungsfahrzeugs ergeben. Die Daten können zunächst mittels einer Datenzwischenspeichervorrichtung des Systems zwischengespeichert werden. Bei dem Überschreiten der Grenzgeschwindigkeit können die zwischengespeicherten Daten mittels der Datenspeichervorrichtung dauerhaft gespeichert werden. Bei einem Unterschreiten der Grenzgeschwindigkeit können die zwischengespeicherten Daten gelöscht werden.

In einer bevorzugten Ausführungsform des Systems können mittels des Systems die Fahrzeuge auf zumindest zwei zueinander benachbarten Fahrstreifen seitlich des Überwachungsfahrzeugs geschwindigkeitsüberwacht werden. Dabei kann die Sensorvorrichtung derart ausgebildet sein, dass Fahrzeuge auf zumindest zwei zueinander benachbarten Fahrstreifen seitlich des Überwachungsfahrzeugs erfassbar sein können. Das Überwachungsfahrzeug kann dann beispielsweise auf einem ersten Fahrstreifen fahren, wobei ein mittels des Systems geschwindigkeitsüberwachbares Fahrzeug auf einem dem ersten Fahrstreifen benachbarten zweiten Fahrstreifen oder einem dem zweiten Fahrstreifen benachbarten dritten Fahrstreifen fahren kann. Es kann auch noch mehr Fahrstreifen geben, die überwacht werden können.

In einer bevorzugten Ausführungsform des Systems können bei einer Vorbeibewegung eines weiteren Fahrzeugs an dem Überwachungsfahrzeug relativ zu dem Überwachungsfahrzeug die ausgesendeten Strahlen von zumindest einem Teil des weiteren Fahrzeugs nacheinander durchquert werden, wobei bei dem Durchqueren der ausgesendeten Strahlen die ausgesendeten Strahlen an dem weiteren Fahrzeug reflektiert werden können, wobei mittels der Verarbeitungsvorrichtung anhand der Empfangssignale ein Abstand zwischen dem Fahrzeug und einem weiteren Fahrzeug ermittelt werden kann. Unter dem Abstand ist ein Abstand in Fahrtrichtung des Fahrzeugs bzw. weiteren Fahrzeugs betrachtet zu verstehen. Demnach kann das System zur Abstandsüberwachung zweier Fahrzeuge eingerichtet sein. Mittels der Verarbeitungsvorrichtung kann anhand der Zeitpunkte, der Geschwindigkeit des Überwachungsfahrzeugs und gegebenenfalls der Differenzgeschwindigkeiten von zwei mittels des Systems aufeinanderfolgend geschwindigkeitsüberwachten Fahrzeugen ein Abstand zwischen den beiden Fahrzeugen ermittelt werden. Bei einem Unterschreiten eines Mindestabstands können mittels der Datenspeichervorrichtung das Fahrzeug und das weitere Fahrzeug betreffende Daten, insbesondere Abstandsdaten, vorzugsweise verschlüsselt, gespeichert werden.

Weitere vorteilhafte Ausführungsformen des Verfahrens ergeben sich aus den Merkmalsbeschreibungen der auf den Vorrichtungsanspruch 1 rückbezogenen Unteransprüche.

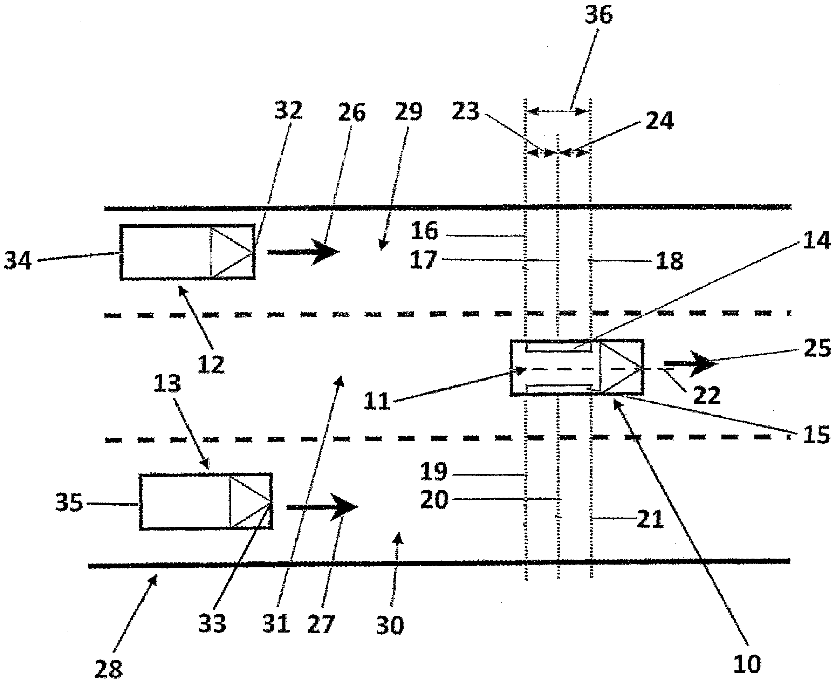

Nachfolgend wird eine bevorzugte Ausführungsform der Erfindung unter Bezugnahme auf die beigefügte Zeichnung näher erläutert.

Die **Figur** zeigt ein als ein Kraftfahrzeug ausgebildetes Überwachungsfahrzeug 10, umfassend ein System 11 zur Geschwindigkeitsüberwachung von Fahrzeugen 12, 13. Das System 11 umfasst zwei Sensorvorrichtungen 14, 15 zur Erfassung der Fahrzeuge 12, 13 beidseitig des Überwachungsfahrzeugs 10. Mittels der Sensorvorrichtung 14 bzw. 15 sind drei Strahlen 16, 17, 18 bzw. 19, 20, 21 aus gepulstem Laserlicht aussendbar, wobei die ausgesendeten Strahlen 16, 17, 18 bzw. 19, 20, 21 senkrecht zu einer Längsachse 22 des Überwachungsfahrzeugs 10, horizontal und in jeweils gleichen Abständen 23, 24 voneinander verlaufen. Das Überwachungsfahrzeug 10 und die Fahrzeuge 12, 13 fahren in gleichgerichteten Fahrtrichtungen 25 des Überwachungsfahrzeugs 10 bzw. 26, 27 der Fahrzeuge 12,13 auf einer Fahrbahn 28, wobei das Fahrzeug 12 auf einem Fahrstreifen 29 der Fahrbahn 28, das Fahrzeug 13 auf einem Fahrstreifen 30 der Fahrbahn 28 und das Überwachungsfahrzeug 10 auf einem zwischen dem Fahrstreifen 29 und dem Fahrstreifen 30 angeordneten Fahrstreifen 31 der Fahrbahn 28 fährt. Bei einem Überholen des Überwachungsfahrzeugs 10 durch das Fahrzeug 12 bzw. 13 sind die ausgesendeten Strahlen 16, 17, 18 bzw. 19, 20, 21 von dem Fahrzeug 12 bzw. 13 zeitlich nacheinander durchfahrbar, wobei bei dem Durchqueren der ausgesendeten Strahlen 16, 17, 18 bzw. 19, 20, 21 die ausgesendeten Strahlen 16, 17, 18 bzw. 19, 20, 21 an dem Fahrzeug 12 bzw. 13 reflektierbar sind, wobei mittels der Sensorvorrichtung 14 bzw. 15 hier nicht gezeigte reflektierte Strahlen aus dem Licht empfangbar und aus den reflektierten Strahlen Empfangssignale erzeugbar sind, wobei mittels einer hier nicht gezeigten Verarbeitungsvorrichtung des Systems 11 anhand der Empfangssignale eine Differenzgeschwindigkeit des Fahrzeugs 12 bzw. 13 zu dem Überwachungsfahrzeug 10 ermittelbar ist. Dabei werden mittels der Verarbeitungsvorrichtung anhand der Empfangssignale drei Zeitpunkte eines Eintritts des Fahrzeugs 12 bzw. 13 mit einem Anfang 32 bzw. 33 des Fahrzeugs 12 bzw. 13 in die ausgesendeten Strahlen 16, 17, 18 bzw. 19, 20, 21 und drei Zeitpunkte eines Austritts des Fahrzeugs 12 bzw. 13 mit einem Ende 34 bzw. 35 des Fahrzeugs 12 bzw. 13 aus den ausgesendeten Strahlen 16, 17, 18 bzw. 19, 20, 21 bestimmt, wobei mittels der Verarbeitungsvorrichtung anhand von drei Zeitdifferenzen aus jeweils zwei Zeitpunkten des Eintritts des Fahrzeugs 12 bzw. 13 mit dem Anfang 32 bzw. 33 in die ausgesendeten Strahlen 16, 17, 18 bzw. 19, 20, 21 und einem Abstand bzw. Abständen 23, 24, 36 von innerhalb der drei Zeitdifferenzen von dem Anfang 32 bzw. 33 durchquerten ausgesendeten Strahlen 16, 17, 18 bzw. 19, 20, 21 und drei Zeitdifferenzen aus jeweils zwei Zeitpunkten des Austritts des Fahrzeugs 12 bzw. 13 mit dem Ende 34 bzw. 35 aus den ausgesendeten Strahlen 16, 17, 18 bzw. 19, 20, 21 und einem Abstand bzw. Abständen 23, 24, 36 von innerhalb der drei Zeitdifferenzen von dem Ende 34 bzw. 35 durchquerten ausgesendeten Strahlen 16, 17, 18 bzw. 19, 20, 21 die Differenzgeschwindigkeit ermittelt wird. Weiter umfasst das System 11 eine hier nicht gezeigte Geschwindigkeitsmessvorrichtung mit zumindest einem optischen Geschwindigkeitssensor, eine hier nicht gezeigte inertiale Messvorrichtung (IMU) mit zumindest einem Beschleunigungssensor und zumindest einem Drehratensensor und eine hier nicht gezeigte Empfangsvorrichtung für ein globales Navigationssatellitensystem (GNSS). Mittels der Geschwindigkeitsmessvorrichtung bzw. dem Geschwindigkeitssensor, der inertialen Messvorrichtung und der Empfangsvorrichtung wird eine Geschwindigkeit des Überwachungsfahrzeugs 10 gemessen. Die Differenzgeschwindigkeit des Fahrzeugs 12 bzw. 13 zu der Geschwindigkeit des Überwachungsfahrzeugs 10 addiert, ergibt eine Geschwindigkeit des Fahrzeugs 12 bzw. 13. Wenn das Überwachungsfahrzeug 10 auf dem Fahrstreifen 29 bzw. 30 fährt, können Fahrzeuge auf den Fahrstreifen 30 und 31 bzw. 29 und 31 mittels des Systems 11 geschwindigkeitsüberwacht werden.

**Patentansprüche**

1. System (11) zur Geschwindigkeitsüberwachung von Fahrzeugen (12, 13), insbesondere Kraftfahrzeugen, wobei das System an einem als ein Kraftfahrzeug ausgebildeten Überwachungsfahrzeug (10) anordbar ist, wobei das System zumindest eine Sensorvorrichtung (14, 15) umfasst, wobei mittels der Sensorvorrichtung zumindest zwei, vorzugsweise zumindest drei, Strahlen (16, 17, 18, 19, 20, 21) aus, vorzugsweise gepulstem, Licht aussendbar sind, wobei bei dem an dem Überwachungsfahrzeug angeordneten System betrachtet die ausgesendeten Strahlen seitlich zu dem Überwachungsfahrzeug und entlang einer Längsachse (22) des Überwachungsfahrzeugs betrachtet jeweils voneinander beabstandet verlaufen, wobei bei einer Vorbeibewegung eines Fahrzeugs an dem Überwachungsfahrzeug relativ zu dem Überwachungsfahrzeug die ausgesendeten Strahlen von zumindest einem Teil des Fahrzeugs nacheinander durchquerbar sind, wobei bei dem Durchqueren der ausgesendeten Strahlen die ausgesendeten Strahlen an dem Fahrzeug reflektierbar sind, wobei mittels der Sensorvorrichtung reflektierte Strahlen aus dem Licht empfangbar und aus den reflektierten Strahlen Empfangssignale erzeugbar sind, wobei das System eine Verarbeitungsvorrichtung umfasst, wobei mittels der Verarbeitungsvorrichtung anhand der Empfangssignale eine Differenzgeschwindigkeit des Fahrzeugs zu dem Überwachungsfahrzeug ermittelbar ist.

2. System nach Anspruch 1,
**dadurch gekennzeichnet,**
**dass** als Licht Laserlicht vorgesehen ist.

3. System nach Anspruch 1 oder 2,
**dadurch gekennzeichnet,**
**dass** die Sensorvorrichtung (14, 15) zumindest zwei, vorzugsweise zumindest drei, vorzugsweise als Lidarsensoren ausgebildete, Sendeempfangsmodule umfasst, wobei mittels der Sendeempfangsmodule jeweils einer der Strahlen (16, 17, 18, 19, 20, 21) aussendbar ist, wobei mittels der Sendeempfangsmodule jeweils einer der reflektierten Strahlen empfangbar ist.

4. System nach einem der vorangehenden Ansprüche,
**dadurch gekennzeichnet,**
**dass** die ausgesendeten Strahlen (16, 17, 18, 19, 20, 21) senkrecht zu der Längsachse (22) und/oder horizontal, vorzugsweise in einer gemeinsamen horizontalen Ebene, verlaufen.

5. System nach einem der vorangehenden Ansprüche,
**dadurch gekennzeichnet,**
**dass** das System (11) eine Geschwindigkeitsmessvorrichtung zur Messung einer Geschwindigkeit des Überwachungsfahrzeugs (10) umfasst, wobei mittels der Verarbeitungsvorrichtung aus der Differenzgeschwindigkeit des Fahrzeugs (12, 13) zu dem Überwachungsfahrzeug und der Geschwindigkeit des Überwachungsfahrzeugs eine Geschwindigkeit des Fahrzeugs ermittelbar ist.

6. System nach Anspruch 5,
**dadurch gekennzeichnet,**
**dass** die Geschwindigkeitsmessvorrichtung zumindest einen optischen Geschwindigkeitssensor umfasst.

7. System nach einem der vorangehenden Ansprüche,
**dadurch gekennzeichnet,**
**dass** das System (11) eine inertiale Messvorrichtung mit zumindest einem Beschleunigungssensor und/oder zumindest einem Drehratensensor und/oder eine Empfangsvorrichtung für ein globales Navigationssatellitensystem umfasst.

8. System nach einem der vorangehenden Ansprüche,
**dadurch gekennzeichnet,**
**dass** das System (11) eine Kameravorrichtung zur Aufnahme zumindest eines Teils einer Umgebung des Überwachungsfahrzeugs (10) umfasst.

9. System nach einem der vorangehenden Ansprüche,
**dadurch gekennzeichnet,**
**dass** das System (11) eine Datenspeichervorrichtung zum, vorzugsweise verschlüsselbaren, Speichern von das Fahrzeug (12, 13) betreffenden Daten, insbesondere Geschwindigkeitsdaten, umfasst.

10. System nach einem der vorangehenden Ansprüche,
**dadurch gekennzeichnet,**
**dass** das System (11) eine weitere Sensorvorrichtung (14, 15) umfasst, wobei mittels des Systems zumindest zwei Fahrzeuge (12, 13) gleichzeitig geschwindigkeitsüberwachbar sind.

11. Überwachungsfahrzeug (10), wobei das Überwachungsfahrzeug als ein Kraftfahrzeug ausgebildet ist, umfassend ein System (11) nach einem der vorangegangenen Ansprüche.

12. Verfahren zur Geschwindigkeitsüberwachung von Fahrzeugen (12, 13), insbesondere Kraftfahrzeuge, mittels eines Systems (11), wobei das System an einem als ein Kraftfahrzeug ausgebildeten Überwachungsfahrzeug (10) angeordnet ist, wobei mittels zumindest einer Sensorvorrichtung (14, 15) des Systems zumindest zwei, vorzugsweise zumindest drei, Strahlen (16, 17, 18, 19, 20, 21) aus, vorzugsweise gepulstem, Licht ausgesendet werden, wobei die ausgesendeten Strahlen seitlich zu dem Überwachungsfahrzeug und entlang einer Längsachse (22) des Überwachungsfahrzeugs betrachtet jeweils voneinander beabstandet verlaufen, wobei bei einer Vorbeibewegung eines Fahrzeugs an dem Überwachungsfahrzeug relativ zu dem Überwachungsfahrzeug die ausgesendeten Strahlen von zumindest einem Teil des Fahrzeugs nacheinander durchquert werden, wobei bei dem Durchqueren der ausgesendeten Strahlen die ausgesendeten Strahlen an dem Fahrzeug reflektiert werden, wobei mittels der Sensorvorrichtung reflektierte Strahlen aus dem Licht empfangen und aus den reflektierten Strahlen Empfangssignale erzeugt werden, wobei mittels einer Verarbeitungsvorrichtung des Systems anhand der Empfangssignale eine Differenzgeschwindigkeit des Fahrzeugs zu dem Überwachungsfahrzeug ermittelt wird.

**13.** Verfahren nach Anspruch 12,
**dadurch gekennzeichnet,**
**dass** mittels der Verarbeitungsvorrichtung anhand der Empfangssignale Zeitpunkte eines Eintritts des Fahrzeugs (14, 15) mit einem Anfang (32, 33) des Fahrzeugs in die ausgesendeten Strahlen (16, 17, 18, 19, 20, 21) und/oder Zeitpunkte eines Austritts des Fahrzeugs mit einem Ende (34, 35) des Fahrzeugs aus den ausgesendeten Strahlen bestimmt werden.

**14.** Verfahren nach Anspruch 13,
**dadurch gekennzeichnet,**
**dass** mittels der Verarbeitungsvorrichtung anhand von zumindest einer Zeitdifferenz aus zwei Zeitpunkten des Eintritts des Fahrzeugs (14, 15) mit dem Anfang (32, 33) in die ausgesendeten Strahlen (16, 17, 18, 19, 20, 21) und zumindest einem Abstand (23, 24, 36) von innerhalb der Zeitdifferenz von dem Anfang durchquerten ausgesendeten Strahlen und/oder zumindest einer Zeitdifferenz aus zwei Zeitpunkten des Austritts des Fahrzeugs mit dem Ende (34, 35) aus den ausgesendeten Strahlen und zumindest einem Abstand von innerhalb der Zeitdifferenz von dem Ende durchquerten ausgesendeten Strahlen die Differenzgeschwindigkeit ermittelt wird.

**15.** Verfahren nach einem der Ansprüche 12 bis 14,
**dadurch gekennzeichnet,**
**dass** mittels der Sensorvorrichtung aus einer Ermittlung von Laufzeiten des Lichts Abstände von Aussendeorten der ausgesendeten Strahlen (16, 17, 18, 19, 20, 21) an der Sensorvorrichtung (14, 15) von Reflexionsorten der ausgesendeten Strahlen, insbesondere an dem Fahrzeug (12, 13), ermittelt werden.

**16.** Verfahren nach Anspruch 15,
**dadurch gekennzeichnet,**
**dass** anhand der Abstände der Aussendesorte von den Reflexionsorten an dem Fahrzeug (12, 13) ein Fahrstreifen (29, 30, 31), auf welchem das Fahrzeug fährt, ermittelt wird.

**17.** Verfahren nach einem der vorangehenden Ansprüche,
**dadurch gekennzeichnet,**
**dass** Daten einer zumindest einen Beschleunigungssensor und/oder zumindest einen Drehratensensor umfassenden inertialen Messvorrichtung des Systems (11) und/oder Daten einer für ein globales Navigationssatellitensystem vorgesehenen Empfangsvorrichtung des Systems bei der Ermittlung der Differenzgeschwindigkeit des Fahrzeugs (12, 13) zu dem Überwachungsfahrzeug (10) berücksichtigt werden und/oder bei einer Messung einer Geschwindigkeit des Überwachungsfahrzeugs berücksichtigt oder zu der Messung der Geschwindigkeit des Überwachungsfahrzeugs verwendet werden.

**18.** Verfahren nach einem der Ansprüche 12 bis 17,
**dadurch gekennzeichnet,**
**dass** das Überwachungsfahrzeug (10) bei der Geschwindigkeitsüberwachung fährt oder stillsteht.

**19.** Verfahren nach Anspruch 18,
**dadurch gekennzeichnet,**
**dass** eine Fahrtrichtung (25) des Überwachungsfahrzeugs (10) und Fahrtrichtungen (26, 27) der Fahrzeuge (12, 13) zueinander identisch und/oder entgegengesetzt sind.

**20.** Verfahren nach einem der Ansprüche 12 bis 19,
**dadurch gekennzeichnet,**
**dass** mittels einer Geschwindigkeitsmessvorrichtung des Systems (11) eine Geschwindigkeit des Überwachungsfahrzeugs (10) gemessen wird, wobei mittels der Verarbeitungsvorrichtung aus der Differenzgeschwindigkeit des Fahrzeugs (12, 13) zu dem Überwachungsfahrzeug und der Geschwindigkeit des Überwachungsfahrzeugs eine Geschwindigkeit des Fahrzeugs ermittelt wird, wobei mittels der Verarbeitungsvorrichtung die Geschwindigkeit des Fahrzeugs, vorzugsweise nach einem Toleranzabzug, mit einer Grenzgeschwindigkeit, vorzugsweise zulässige Höchstgeschwindigkeit, verglichen wird, wobei bei einem Überschreiten der Grenzgeschwindigkeit mittels einer Datenspeichervorrichtung des Systems das Fahrzeug betreffende Daten, insbesondere Geschwindigkeitsdaten, vorzugsweise verschlüsselt, gespeichert werden.

**21.** Verfahren nach einem der vorangehenden Ansprüche,
**dadurch gekennzeichnet,**
**dass** mittels des Systems (11) die Fahrzeuge (12, 13) auf zumindest zwei zueinander benachbarten Fahrstreifen (29, 30, 31) seitlich des Überwachungsfahrzeugs (10) geschwindigkeitsüberwacht werden.

**22.** Verfahren nach einem der vorangehenden Ansprüche,
**dadurch gekennzeichnet,**
**dass** bei einer Vorbeibewegung eines weiteren Fahrzeugs an dem Überwachungsfahrzeug (10) relativ zu dem Überwachungsfahrzeug die ausgesendeten Strahlen (16, 17, 18, 19, 20, 21) von zumindest einem Teil des weiteren Fahrzeugs nacheinander durchquert werden, wobei bei dem Durchqueren der ausgesendeten Strahlen die ausgesendeten Strahlen an dem weiteren Fahrzeug reflektiert werden, wobei mittels der Verarbeitungsvorrichtung anhand der Empfangssignale ein Abstand zwischen dem Fahrzeug und einem weiteren Fahrzeug ermit-

telt wird.

EP 4 485 420 A1

36
32  26  29  23  24
34  16  14
17  18
12  25
13  11  22
35  15
19
20
21
33  31  27  30
28  10

**EP 4 485 420 A1**

## EUROPÄISCHER RECHERCHENBERICHT

Nummer der Anmeldung

EP 24 18 1626

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/116851 A1 (BURKE BERTRAM V [US] ET AL) 27. April 2017 (2017-04-27) * Absatz [0024] - Absätze [0049], [0054]; Abbildungen 5A-5F * * Abbildungen 7A-7i * - - - - - | 1-22 | INV. G08G1/04 G08G1/052 G08G1/01 G01S17/88 |
| X | US 2019/073540 A1 (YAMADA HIROYUKI [JP] ET AL) 7. März 2019 (2019-03-07) * Absatz [0037] - Absatz [0044]; Abbildungen 6-9 * * Absatz [0057] - Absätze [0059], [0069], [0075] * - - - - - | 1-8, 10-12, 15-19,21 | |

RECHERCHIERTE SACHGEBIETE (IPC)

G08G

Der vorliegende Recherchenbericht wurde für alle Patentansprüche erstellt

| Recherchenort | Abschlußdatum der Recherche | Prüfer |
|---|---|---|
| Den Haag | 13. November 2024 | Malagoli, M |

**EP 4 485 420 A1**

## ANHANG ZUM EUROPÄISCHEN RECHERCHENBERICHT
## ÜBER DIE EUROPÄISCHE PATENTANMELDUNG NR.

EP 24 18 1626

13-11-2024

| Im Recherchenbericht angeführtes Patentdokument | Datum der Veröffentlichung | Mitglied(er) der Patentfamilie | Datum der Veröffentlichung |
|---|---|---|---|
| US 2017116851 A1 | 27-04-2017 | KEINE | |
| US 2019073540 A1 | 07-03-2019 | CN 109466542 A | 15-03-2019 |
| | | JP 6592852 B2 | 23-10-2019 |
| | | JP 2019049774 A | 28-03-2019 |
| | | US 2019073540 A1 | 07-03-2019 |

EPO FORM P0461